# FASCICULE DE BREVET EUROPEEN

(11) **EP 2 936 293 B1**
(45) Date de publication et mention de la délivrance du brevet: **10.04.2019**
(21) Numéro de dépôt: 13810944.2
(22) Date de dépôt: 18.12.2013
(51) Int. Cl.: G06F 3/0487, G06F 3/01, G06F 3/0488, G08G 5/00

(54) **TERMINAL D'OPERATEUR DE CONTROLE DE TRAFIC AERIEN**
BEDIENTERMINAL FÜR FLUGVERKEHRSKONTROLLE
AIR TRAFFIC CONTROL OPERATOR TERMINAL

(30) Priorité: 18.12.2012 FR 1203456
(43) Date de publication de la demande: 28.10.2015
(73) Titulaire: THALES, 92200 Neuilly-sur-Seine (FR)
(72) Inventeur: PINHEIRO, Jean-Philippe, F-94628 Rungis Cedex (FR); HADJAZ, Areski, F-94628 Rungis Cedex (FR)
(74) Mandataire: Lavoix
(86) Numéro de dépôt international: PCT/EP2013/077098
(87) Numéro de publication internationale: WO 2014/096007

(56) Documents cités:
- WO-A1-2012/154456
- WO-A2-2007/072015
- FR-A1- 2 923 008
- US-A1- 2004 098 462
- US-A1- 2010 245 680
- Sophie Stellmach ET AL: "Look & Touch: Gaze-supported Target Acquisition", Proceedings of the 2012 ACM annual conference on Human Factors in Computing Systems, CHI '12, 5 May 2012 (2012-05-05), pages 2981-2990, XP055087016, New York, New York, USA DOI: 10.1145/2207676.2208709 ISBN: 978-1-45-031015-4 Retrieved from the Internet: URL:http://delivery.acm.org/10.1145/221000 0/2208709/p2981-stellmach.pdf?ip=145.64.25 4.243&id=2208709&acc=ACTIVE SERVICE&key=986B26D8D17D60C88D75A192E31121 43&CFID=259167676&CFTOKEN=52569443&__acm__ =1383750137_80e991ba049c38b06b6b179cc4dc46 b8 [retrieved on 2013-11-06]
- Jayson Turner ET AL: "Combining gaze with manual interaction to extend physical reach.", 1st international workshop on pervasive eye tracking & mobile eye-based interaction, PETMEI '11, 18 September 2011 (2011-09-18), pages 33-36, XP055057128, Beijing, China DOI: 10.1145/2029956.2029966

## Description

La présente invention concerne un terminal d'opérateur de contrôle de trafic aérien.

Plus particulièrement, l'invention se rapporte à un terminal de ce type qui comporte des moyens d'affichage d'informations de trafic aérien et des moyens formant l'interface homme/machine mis à la disposition de l'opérateur pour interagir avec le terminal notamment pour gérer le trafic et le fonctionnement de ce terminal.

Dans l'état de la technique, les moyens formant interface homme/machine mis à la disposition de l'opérateur comprennent par exemple en plus d'un moniteur ou afficheur quelconque, une souris ou une boule de navigation/sélection et un clavier, qui lui permettent de pointer/sélectionner par exemple un aéronef affiché et pointé et d'entrer à destination de celui-ci par exemple des informations de contrôle/commande/gestion de trafic....

On pourra par exemple se reporter aux documents FR A 2 923 008 et WO A 2007072015 pour trouver des exemples de réalisation de tels terminaux.

Dans l'état de l'art, il est aussi connu de permettre l'interaction avec un terminal électronique, en ajoutant un dispositif de poursuite du regard et un terminal mobile tactile présentant une interface graphique, pour permettre l'interaction simultanée par moyen de gestes tactiles et du regard (voir par exemple: Turner, Bulling & Gellersen "Combining Gaze with Manual Interaction to Extend Physical Reach", in PETMEI'11, September 18 2011, Beijing, China; Stellmach & Dachselt "Look&Touch: Gaze-Supported Target Acquisition" CH12012, May 5 2012, Austin, Texas, USA; publication de demande de brevet US 2010 / 0245680 A1).

Cependant, ces structures d'interface homme/machine présentent un certain nombre d'inconvénients notamment au niveau des manipulations requises de la part de l'opérateur.

De plus, l'utilisation et la manoeuvre voire l'implantation ou l'installation de ces différents moyens d'interface en environnement contraint comme par exemple lorsque le terminal est embarqué à bord d'un porteur mobile tel qu'un aéronef, sont extrêmement difficiles voire délicates.

Le but de l'invention est donc de résoudre ces problèmes en simplifiant les interactions entre l'opérateur et le terminal et en réduisant l'espace requis pour leur implantation.

A cet effet l'invention a pour objet un terminal d'opérateur de contrôle de trafic aérien, du type comportant des moyens d'affichage d'informations de trafic aérien et des moyens formant interface homme/machine mis à la disposition de l'opérateur notamment pour gérer le trafic et le fonctionnement du terminal, caractérisé en ce que les moyens formant interface homme/machine comportent en outre une tablette tactile et un occulomètre de détection de la position des yeux de l'opérateur pour piloter un basculement du fonctionnement de la tablette tactile entre un premier mode de fonctionnement de gestion du trafic et du fonctionnement du terminal par gestes de l'opérateur sur la tablette tactile et un second mode de fonctionnement de saisie de données par l'opérateur, lorsque les yeux de celui-ci quittent les moyens d'affichage d'informations pour regarder la tablette tactile.

Selon d'autres caractéristiques du terminal suivant l'invention prises seules ou en combinaison :
- les données saisies par l'opérateur dans ce second mode de fonctionnement de la tablette tactile sont des données pour le dernier aéronef regardé par l'opérateur sur les moyens d'affichage d'informations avant de quitter celui-ci des yeux ;
- les données saisies sont mises en évidence sur les moyens d'affichage d'informations lorsque l'opérateur regarde à nouveau ceux-ci après avoir quitté des yeux la tablette tactile ;
- les données saisies sont mises en évidence par une modification des paramètres d'affichage de celles-ci sur les moyens d'affichage ;
- les données saisies sont affichées dans une couleur différente de celle du reste des informations affichées, pendant une période de temps prédéterminée ;
- les données saisies sont affichées par clignotement, pendant une période de temps prédéterminée ;
- il comporte des moyens de contrôle de la luminosité des informations affichées sur les moyens d'affichage en fonction de la zone regardée par l'opérateur de contrôle de trafic aérien pour mieux faire ressortir les informations dans son champ de vue sur les moyens d'affichage d'informations ;
- il comporte des moyens de déclenchement de l'affichage d'informations d'alerte de l'opérateur de contrôle de trafic aérien dans la zone des moyens d'affichage regardée par celui-ci, pour attirer son attention sur un évènement et guider son regard vers celui-ci sur les moyens d'affichage ;
- il est adapté pour prendre en charge ou transférer un aéronef regardé par l'opérateur si celui-ci balaye la tablette tactile avec au moins un doigt essentiellement selon une direction de la tablette ;
- il est adapté pour afficher le plan de vol d'un aéronef regardé par l'opérateur si celui-ci appuie avec au moins deux doigts de façon décalée dans le temps sur la tablette tactile ;
- il est adapté pour afficher la distance entre deux aéronefs si l'opérateur regarde le premier aéronef, pose un doigt sur la tablette tactile puis regarde le second aéronef ;
- il est adapté pour afficher la distance minimale de séparation de deux aéronefs lors de leur croisement, si l'opérateur regarde le premier aéronef, pose au moins deux doigts sur la tablette tactile, regarde le second aéronef et enfin retire ses doigts de la tablette tactile ;
- il est adapté pour activer ou désactiver un élément affiché sur les moyens d'affichage si l'opérateur regarde cet élément et balaye la tablette tactile avec au moins un doigt essentiellement selon une autre direction de la tablette.

L'invention sera mieux comprise à l'aide de la description qui va suivre, donnée uniquement à titre d'exemple et faite en se référant aux dessins annexés, sur lesquels :
- les figures 1 et 2 représentent de façon schématique un terminal d'opérateur de contrôle de trafic aérien,
- Les figures 3 et 4 illustrent un changement de mode de fonctionnement de moyens à surface tactile entrant dans la constitution d'un terminal selon l'invention, et
- les figures 5 à 12 illustrent différentes actions de contrôle/commande par gestes de la part de l'opérateur.

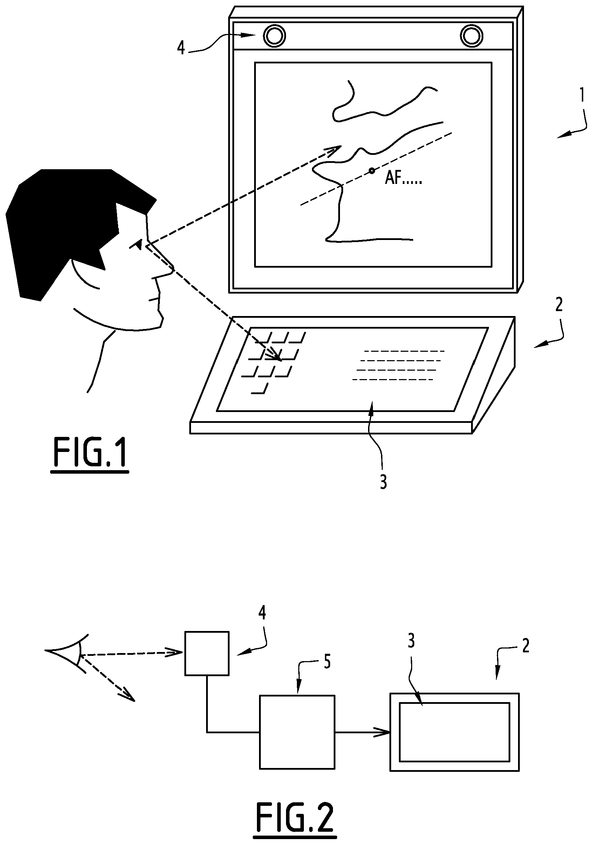

On a en effet illustré sur ces figures et en particulier sur les figures 1 à 4, un terminal d'opérateur de contrôle de trafic aérien, qui comporte de façon classique, des moyens d'affichage d'informations de trafic aérien désignés par la référence générale 1 sur la figure 1 et des moyens formant interface homme/machine mis à la disposition de l'opérateur pour interagir avec ce terminal, notamment pour gérer le trafic et le fonctionnement du terminal.

Ces moyens formant interface homme/machine sont désignés par la référence générale 2 sur ces figures 1 et 2.

En fait ces moyens formant interface homme/machine comportent en outre une tablette tactile désignée par la référence générale 3 sur ces figures 1 à 4 et des moyens formant occulomètre désignés par la référence générale 4 sur les figures 1 et 2, de détection de la position des yeux de l'opérateur.

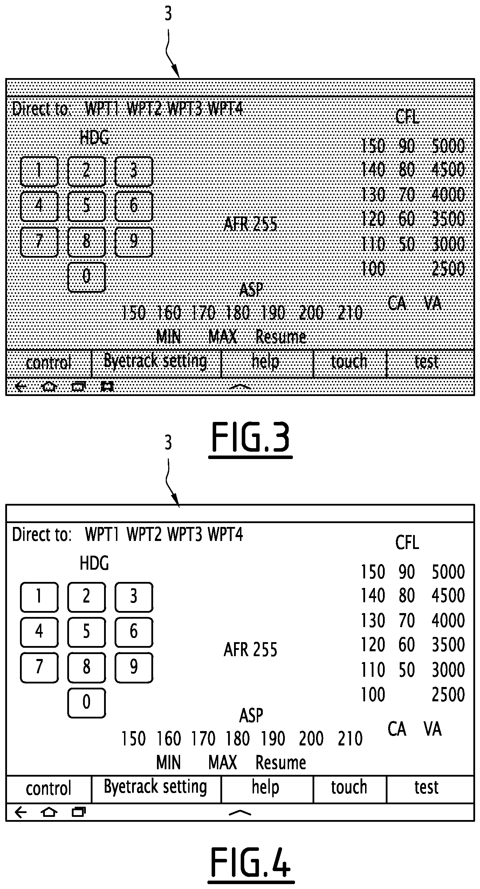

En fait et comme cela est illustré sur ces figures, ces moyens formant occulomètre 4 peuvent présenter n'importe quelle structure appropriée, telle que déjà connue dans l'état de la technique et permettent de détecter la position des yeux de l'opérateur, afin de déterminer où regarde l'opérateur et pour piloter un basculement du fonctionnement de la tablette tactile entre un premier mode de fonctionnement de gestion du trafic et du fonctionnement du terminal par geste de l'opérateur sur la tablette tactile et un second mode de fonctionnement de saisie de données par l'opérateur, lorsque les yeux de celui-ci quittent les moyens d'affichage d'informations pour regarder la tablette tactile, comme cela est illustré sur ces figures et en particulier sur les figures 3 et 4.

On voit en effet par exemple un changement de couleur ou de luminosité du fond d'écran de cette tablette entre les figures 3 et 4, illustrant un changement de mode de fonctionnement, déclenché par le changement d'axe de vue de l'opérateur.

En effet dans le premier mode de fonctionnement par exemple illustré sur la figure 3, l'opérateur regarde les moyens d'affichage d'informations 1 et la tablette tactile 3 est alors en mode de saisie d'ordre par geste de l'opérateur sur cette tablette.

Lorsque l'opérateur quitte des yeux ces moyens d'affichage et regarde alors la tablette tactile, comme illustré sur la figure 4, l'occulomètre 4 détecte ce déplacement du regard de l'opérateur pour piloter un basculement du fonctionnement de cette tablette 3 de ce premier mode de fonctionnement de gestion du terminal par geste de l'opérateur à un second mode de fonctionnement de saisie de données ou d'informations quelconques par l'opérateur, par exemple à destination du terminal, d'un aéronef ou autre..

Ces informations peuvent alors être saisies par l'opérateur en tapant par exemple sur des touches de cette tablette qui sont alors activées dans ce mode de fonctionnement, comme illustré sur la figure 4.

Ainsi par exemple des données/informations/instructions/acquitements...saisis par l'opérateur dans ce second mode de fonctionnement de la tablette tactile, peuvent être des données à destination ou relatives au dernier aéronef regardé par l'opérateur sur les moyens d'affichage d'informations 1 avant de quitter celui-ci des yeux..

Une unité de traitement d'informations désignée par la référence par exemple 5 sur cette figure 2, permet en effet de conserver en mémoire l'aéronef regardé par l'opérateur afin par exemple de passer des ordres de contrôle/commande/gestion de trafic à celui-ci.

Ces données saisies peuvent alors être mises en évidence sur les moyens d'affichage d'informations par exemple lorsque l'opérateur regarde à nouveau ceux-ci après avoir quitté des yeux la tablette tactile et par exemple après la saisie de celles-ci sur la tablette.

En effet pendant le temps où l'opérateur a les yeux braqués sur la tablette tactile pour saisir des données, il ne regarde pas les moyens d'affichage.

Il n'est donc pas utile de mettre les modifications apportées en évidence sur ces moyens pendant ce temps car personne ne regarde ces moyens pendant cette période de temps.

Mais dès que l'opérateur regarde à nouveau les moyens d'affichage, il est intéressant de la faire.

Cette mise en évidence est alors commandée par les moyens formant occulomètre qui détectent le changement d'axe de vision de l'opérateur vers ces moyens d'affichage.

Cette mise en évidence des données saisies/modifiées...peut être par exemple obtenue par une modification des paramètres d'affichage de ces informations sur les moyens d'affichage.

Les données saisies sont ainsi affichées par exemple dans une couleur différente de celle du reste des informations affichées pendant une période de temps prédéterminée.

Par exemple les informations saisies ou modifiées peuvent être mises en évidence en rouge sur les moyens d'affichage.

Ces données saisies ou modifiées peuvent également être affichées par clignotement par exemple pendant une période de temps prédéterminée afin de les faire ressortir.

L'occulomètre permet également d'assurer une commande ou un contrôle de la luminosité des informations affichées sur les moyens d'affichage 1 en fonction de la zone regardée par l'opérateur de contrôle de trafic aérien.

Ceci permet de mieux faire ressortir les informations dans son champ de vue sur les moyens d'affichage d'informations, par rapport au reste des informations dans les autres zones environnantes des moyens d'affichage afin de lui permettre de se concentrer sur ces informations et de ne pas être distrait par d'autres informations ou parties de cette afficheur.

Ainsi par exemple les données dans le champ de vision de l'opérateur sont affichées avec une luminosité normale tandis que les autres données, hors de ce champ de vision, sont affichées par exemple avec une luminosité réduite ou peuvent être plus ou moins masquées.

Bien entendu d'autres modes de différenciation des données dans et hors du champ de vision de l'opérateur peuvent être envisagés.

On peut également prévoir dans le terminal de contrôle de trafic aérien selon l'invention, des moyens de déclenchement de l'affichage d'informations d'alerte de l'opérateur de contrôle de trafic aérien dans la zone des moyens d'affichage regardée par celui-ci, pour attirer son attention sur un évènement qui se produit dans une autre zone de l'affichage.

Ceci permet ainsi d'attirer et de guider le regard de cet opérateur vers cet évènement afin que l'opérateur perçoive celui-ci le plus simplement et le plus rapidement possible.

Un rappel sonore peut également être associé à cette alerte visuelle.

Ainsi une flèche clignotante rouge peut par exemple être utilisée pour indiquer à l'opérateur qu'il convient que celui-ci regarde dans la direction indiquée par cette flèche pour avoir accès à un évènement à prendre en considération.

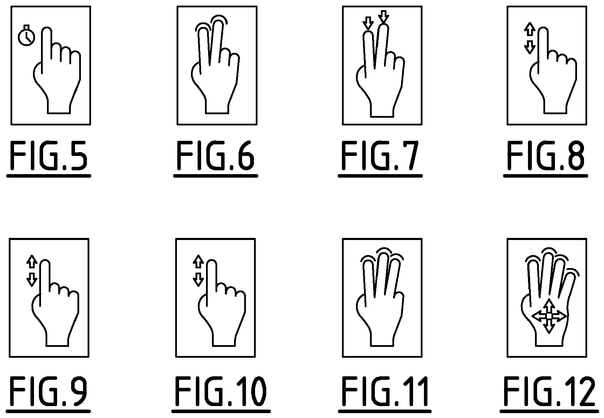

Les figures 5 à 12 illustrent différents gestes pouvant par exemple être réalisés par l'opérateur pour déclencher telle ou telle opération ou fonction ... du terminal de contrôle du trafic.

Ainsi par exemple l'un des gestes de l'opérateur peut par exemple consister à balayer avec au moins un doigt essentiellement selon une direction,par exemple le long d'un bord la tablette tactile, pour prendre en charge ou transférer un aéronef regardé par l'opérateur lors de ce geste.

Ces opérations de prise en charge et de transfert d'un aéronef sont bien connues dans le domaine et ne seront donc pas décrites plus en détails par la suite.

Un autre geste de commande peut consister par exemple pour l'opérateur à appuyer avec au moins deux doigts de façon décalée dans le temps sur la tablette tactile, pour déclencher l'affichage du plan de vol de l'aéronef regardé par cet opérateur à ce moment-là.

La distance entre deux aéronefs peut également être affichée par exemple si l'opérateur regarde le premier aéronef, pose un doigt sur la tablette tactile puis regarde le second aéronef.

Enfin la distance minimale de séparation de deux aéronefs lors de leur croisement peut également être affichée si l'opérateur regarde ce premier aéronef, pose au moins deux doigts sur la tablette tactile, regarde le second aéronef et enfin retire ses doigts de la tablette tactile.

Cette distance est alors par exemple calculée à partir des plans de vol des aéronefs ou de données issues par exemple d'un radar de contrôle de trafic aérien, etc...,.

Bien entendu d'autres gestes peuvent encore être envisagés pour activer d'autres fonctions, comme par exemple l'activation ou la désactivation d'un élément affiché sur les moyens d'affichage si l'opérateur regarde cet élément et balaye la tablette tactile avec au moins un doigt essentiellement selon une autre direction de cette tablette, par exemple selon un bord latéral de celle-ci.

D'autres gestes de montées/descente ou de balayage dans un sens ou un autre peuvent être envisagés de même que des mouvements rotatifs....

Ces différents gestes de l'opérateur, à un ou plusieurs doigts, posés ensemble ou de façon décalée dans le temps,... sont en fait détectés et reconnus par des moyens de gestion du fonctionnement de la tablette tactile pour déclencher l'activation ou la désactivation par exemple de fonctions correspondantes du terminal.

On conçoit que ceci simplifie grandement les interactions entre le ou les opérateurs et le ou les terminaux correspondants dans la mesure où les moyens formant interface homme/machine sont réduits à la limite et très simples d'utilisation.

## Revendications

1. Terminal d'opérateur de contrôle de trafic aérien, du type comportant des moyens d'affichage d'informations de trafic aérien (1) et des moyens formant interface homme/machine (2) mis à la disposition de l'opérateur notamment pour gérer le trafic et le fonctionnement du terminal, **caractérisé en ce que** les moyens formant interface homme/machine comportent en outre une tablette tactile (3) et un occulomètre (4) de détection de la position des yeux de l'opérateur pour piloter un basculement du fonctionnement de la tablette tactile (3) entre un premier mode de fonctionnement de gestion du trafic et du fonctionnement du terminal par gestes de l'opérateur sur la tablette tactile (3, fig.3) et un second mode de fonctionnement de saisie de données par l'opérateur (3, fig.4), lorsque les yeux de celui-ci quittent les moyens d'affichage d'informations (1) pour regarder la tablette tactile (3).

2. Terminal selon la revendication 1, **caractérisé en ce que** les données saisies par l'opérateur dans ce second mode de fonctionnement de la tablette tactile (3, fig.4) sont des données pour le dernier aéronef regardé par l'opérateur sur les moyens d'affichage d'informations (1) avant de quitter celui-ci des yeux.

3. Terminal selon la revendication 2, **caractérisé en ce que** les données saisies sont mises en évidence sur les moyens d'affichage d'informations lorsque l'opérateur regarde à nouveau ceux-ci après avoir quitté des yeux la tablette tactile.

4. Terminal selon la revendication 3, **caractérisé en ce que** les données saisies sont mises en évidence par une modification des paramètres d'affichage de celles-ci sur les moyens d'affichage (1).

5. Terminal selon la revendication 3 ou 4, **caractérisé en ce que** les données saisies sont affichées dans une couleur différente de celle du reste des informations affichées, pendant une période de temps prédéterminée.

6. Terminal selon la revendication 3, 4 ou 5, **caractérisé en ce que** les données saisies sont affichées par clignotement, pendant une période de temps prédéterminée.

7. Terminal selon l'une quelconque des revendications précédentes, **caractérisé en ce qu'**il comporte des moyens de contrôle de la luminosité des informations affichées sur les moyens d'affichage (1) en fonction de la zone regardée par l'opérateur de contrôle de trafic aérien pour mieux faire ressortir les informations dans son champ de vue sur les moyens d'affichage d'informations.

8. Terminal selon l'une quelconque des revendications précédentes, **caractérisé en ce qu'**il comporte des moyens de déclenchement de l'affichage d'informations d'alerte de l'opérateur de contrôle de trafic aérien dans la zone des moyens d'affichage regardée par celui-ci, pour attirer son attention sur un évènement et guider son regard vers celui-ci sur les moyens d'affichage.

9. Terminal selon l'une quelconque des revendications précédentes, **caractérisé en ce qu'**il est adapté pour prendre en charge ou transférer un aéronef regardé par l'opérateur si celui-ci balaye la tablette tactile (3) avec au moins un doigt essentiellement selon une direction de la tablette.

10. terminal selon l'une quelconque des revendications précédentes, **caractérisé en ce qu'**il est adapté pour afficher le plan de vol d'un aéronef regardé par l'opérateur si celui-ci appuie avec au moins deux doigts de façon décalée dans le temps sur la tablette tactile (3).

11. Terminal selon l'une quelconque des revendications précédentes, **caractérisé en ce qu'**il est adapté pour afficher la distance entre deux aéronefs si l'opérateur regarde le premier aéronef, pose un doigt sur la tablette tactile (3) puis regarde le second aéronef.

12. Terminal selon l'une quelconque des revendications précédentes, **caractérisé en ce qu'**il est adapté pour afficher la distance minimale de séparation de deux aéronefs lors de leur croisement, si l'opérateur regarde le premier aéronef, pose au moins deux doigts sur la tablette tactile (3), regarde le second aéronef et enfin retire ses doigts de la tablette tactile.

13. Terminal selon l'une quelconque des revendications précédentes, **caractérisé en ce qu'**il est adapté pour activer ou désactiver un élément affiché sur les moyens d'affichage si l'opérateur regarde cet élément et balaye la tablette tactile (3) avec au moins un doigt essentiellement selon une autre direction de la tablette.

## Patentansprüche

1. Endeinrichtung eines Bedieners für die Kontrolle des Luftverkehrs von der Art, welche Mittel zur Anzeige von Informationen des Luftverkehrs (1) und Mensch/Maschine-Schnittstelle bildende Mittel (2), welche dem Bediener insbesondere dazu zur Verfügung gestellt sind, den Verkehr und den Betrieb der Endeinrichtung zu verwalten, aufweist, **gekennzeichnet dadurch, dass** die Mensch/Maschine-Schnittstelle bildenden Mittel ferner ein berührungsempfindliches Tablet (3) und ein Okulometer (4) zur Erfassung der Position der Augen des Bedieners aufweisen, um eine Umschaltung des Betriebs des berührungsempfindlichen Tablets (3) zwischen einem ersten Betriebsmodus zur Verwaltung des Verkehrs und des Betriebs der Endeinrichtung mittels Gesten des Bedieners auf dem berührungsempfindlichen Tablet (3, Fig. 3) und einem zweiten Betriebsmodus zur Eingabe von Daten durch den Bediener (3, Fig. 4), wenn dessen Augen die Mittel zur Anzeige von Informationen (1) verlassen, um das berührungsempfindliche Tablet (3) zu betrachten, zu steuern.

2. Endeinrichtung gemäß dem Anspruch 1, **gekennzeichnet dadurch, dass** die Daten, welche durch den Bediener in dem zweiten Betriebsmodus des berührungsempfindlichen Tablets (3, Fig. 4) eingegeben werden, Daten für das letzte Flugzeug, welches durch den Bediener auf den Mitteln zur Anzeige von Informationen (1) betrachtet wurde, bevor die Augen dieses verlassen haben, sind.

3. Endeinrichtung gemäß dem Anspruch 2, **gekennzeichnet dadurch, dass** die eingegebenen Daten deutlich auf den Mitteln zur Anzeige von Informationen hervorgehoben werden, wenn der Betrachter aufs Neue diese betrachtet, nachdem er die Augen von dem berührungsempfindlichen Tablet genommen hat.

4. Endeinrichtung gemäß dem Anspruch 3, **gekennzeichnet dadurch, dass** die eingegebenen Daten deutlich durch eine Modifikation deren Anzeigeparameter auf den Mitteln zur Anzeige (1) hervorgehoben werden.

5. Endeinrichtung gemäß dem Anspruch 3 oder 4, **gekennzeichnet dadurch, dass** die eingegebenen Daten in einer Farbe, welche von derjenigen der übrigen angezeigten Informationen verschieden ist, während einer vorbestimmten Zeitdauer angezeigt werden.

6. Endeinrichtung gemäß dem Anspruch 3, 4 oder 5, **gekennzeichnet dadurch, dass** die eingegebenen Daten mittels Blinkens während einer vorbestimmten Zeitdauer angezeigt werden.

7. Endeinrichtung gemäß irgendeinem der vorhergehenden Ansprüche, **gekennzeichnet dadurch, dass** sie Mittel zur Steuerung der Helligkeit von auf den Mitteln zur Anzeige (1) angezeigten Informationen in Abhängigkeit von dem durch den Bediener für die Kontrolle des Luftverkehrs betrachteten Bereich, um die Informationen in dessen Blickfeld auf den Mitteln zur Anzeige von Informationen besser herauszustellen, aufweist.

8. Endeinrichtung gemäß irgendeinem der vorhergehenden Ansprüche, **gekennzeichnet dadurch, dass** sie Mittel zum Auslösen der Anzeige von Informationen zur Warnung des Bedieners für die Kontrolle des Luftverkehrs in dem durch diesen betrachteten Bereich der Mittel zur Anzeige, um dessen Aufmerksamkeit auf ein Ereignis zu lenken und seinen Blick hin zu diesem auf den Mitteln zur Anzeige zu führen, aufweist.

9. Endeinrichtung gemäß irgendeinem der vorhergehenden Ansprüche, **gekennzeichnet dadurch, dass** sie dazu eingerichtet ist, ein durch den Bediener betrachtetes Flugzeug zu übernehmen oder weiterzugeben, falls dieser über das berührungsempfindliche Tablet (3) mit mindestens einem Finger im Wesentlichen entlang einer Richtung des Tablets streicht.

10. Endeinrichtung gemäß irgendeinem der vorhergehenden Ansprüche, **gekennzeichnet dadurch, dass** sie dazu eingerichtet ist, den Flugplan eines durch den Bediener betrachteten Flugzeugs anzuzeigen, falls dieser mit mindestens zwei Fingern zeitlich versetzt auf das berührungsempfindliche Tablet (3) drückt.

11. Endeinrichtung gemäß irgendeinem der vorhergehenden Ansprüche, **gekennzeichnet dadurch, dass** sie dazu eingerichtet ist, den Abstand zwischen zwei Flugzeugen anzuzeigen, falls der Bediener das erste Flugzeug betrachtet, einen Finger auf das berührungsempfindlichen Tablet (3) legt und dann das zweite Flugzeug betrachtet.

12. Endeinrichtung gemäß irgendeinem der vorhergehenden Ansprüche, **gekennzeichnet dadurch, dass** sie dazu eingerichtet ist, die minimale Distanz der Entfernung von zwei Flugzeugen während deren Kreuzung anzuzeigen, falls der Bediener das erste Flugzeug betrachtet, mindestens zwei Finger auf das berührungsempfindlichen Tablet (3) legt, das zweite Flugzeug betrachtet und schließlich seine Finger von dem berührungsempfindlichen Tablet wegnimmt.

13. Endeinrichtung gemäß irgendeinem der vorhergehenden Ansprüche, **gekennzeichnet dadurch, dass** sie dazu eingerichtet ist, ein auf den Mitteln zur Anzeige angezeigtes Element zu aktivieren oder zu deaktivieren, falls der Betrachter dieses Element betrachtet und mit mindestens einen Finger im Wesentlichen entlang einer anderen Richtung des Tablets über das berührungsempfindliche Tablet (3) streicht.

## Claims

1. Air traffic control operator terminal, of the type comprising air traffic information display means (1) and means forming a man/machine interface (2) provided to the operator especially for managing the traffic and the operation of the terminal, **characterised in that** the means forming a man/machine interface further comprise a touch-sensitive tablet (3) and an oculometer (4) for detecting the position of the eyes of the operator in order to control the switching of the operation of the touch-sensitive tablet (3) between a first operating mode for managing the traffic and operating the terminal by means of gestures of the operator on the touch-sensitive tablet (3, Fig. 3) and a second operating mode for the acquisition of data by the operator (3, Fig. 4), when the operator stops looking at the information display means (1) in order to look at the touch-sensitive tablet (3).

2. Terminal according to claim 1, **characterised in that** the data acquired by the operator in the second operating mode of the touch-sensitive tablet (3, Fig. 4) are data for the last aircraft looked at by the operator on the information display means (1) before he stopped looking at the information display means.

3. Terminal according to claim 2, **characterised in that** the acquired data are highlighted on the information display means when the operator looks at the information display means again after he has stopped looking at the touch-sensitive tablet.

4. Terminal according to claim 3, **characterised in that** the acquired data are highlighted by a modification of the display parameters thereof on the display means (1).

5. Terminal according to claim 3 or 4, **characterised in that** the acquired data are displayed in a different colour to that of the remainder of the displayed information, for a predetermined period of time.

6. Terminal according to claim 3, 4 or 5, **characterised in that** the acquired data are displayed by blinking, for a predetermined period of time.

7. Terminal according to any one of the preceding claims, **characterised in that** it comprises means for controlling the brightness of the information displayed on the display means (1) in dependence on the zone looked at by the air traffic control operator, in order better to emphasise the information in his field of view on the information display means.

8. Terminal according to any one of the preceding claims, **characterised in that** it comprises means for triggering the display of alert information for the air traffic control operator in the zone of the display means at which he is looking, in order to draw his attention to an event and direct his gaze towards that event on the display means.

9. Terminal according to any one of the preceding claims, **characterised in that** it is adapted to take charge of or transfer an aircraft at which the operator is looking if he swipes the touch-sensitive tablet (3) with at least one finger substantially in one direction of the tablet.

10. Terminal according to any one of the preceding claims, **characterised in that** it is adapted to display the flight plan of an aircraft at which the operator is looking if he presses the touch-sensitive tablet (3) with at least two fingers in a manner offset in terms of time.

11. Terminal according to any one of the preceding claims, **characterised in that** it is adapted to display the distance between two aircraft if the operator looks at the first aircraft, places a finger on the touch-sensitive tablet (3) and then looks at the second aircraft.

12. Terminal according to any one of the preceding claims, **characterised in that** it is adapted to display the minimum separation distance of two aircraft when they cross, if the operator looks at the first aircraft, places at least two fingers on the touch-sensitive tablet (3), looks at the second aircraft and finally removes his fingers from the touch-sensitive tablet.

13. Terminal according to any one of the preceding claims, **characterised in that** it is adapted to activate or deactivate an element displayed on the display means if the operator looks at that element and swipes the touch-sensitive tablet (3) with at least one finger substantially in another direction of the tablet.
